# EUROPEAN PATENT APPLICATION

(11) **EP 3 111 757 A1**
(43) Date of publication of application: **04.01.2017**
(21) Application number: 16176580.5
(22) Date of filing: 28.06.2016
(51) Int. Cl.: A01K 1/015, A01K 1/01, A01K 1/10

(54) **A STABLE FOR KEEPING CATTLE, AS WELL AS A STABLE ENERGY SYSTEM**

(30) Priority: 30.06.2015 NL 2015057
(71) Applicant: R&R Systems Holding B.V., 5422 VV Gemert (NL)
(72) Inventor: VAN HOUTUM, Henricus Johannes Maria, 5422 VV Gemert (NL); VAN HOUTUM, Johannes Henricus Cornelis Petrus, 5422 VV Gemert (NL)
(74) Representative: Algemeen Octrooi- en Merkenbureau B.V.

(57) **Abstract**

The invention relates to a stable (1) for keeping cattle, in particular for keeping dairy cattle. The stable (1) comprises a stable area with a stable floor (5) that is accessible to the dairy cattle. The stable area is divided into at least a bedding part, a feed alley (12) and a manure collecting part. The stable (1) according to the present invention comprises floor cooling means (2A, 2B, 2C) for cooling at least a part of the stable floor (5) of the stable (1). The invention further relates to a stable energy system comprising a stable (1) according to the invention and a heat pump unit (107) that is connected to the floor cooling means (2A, 2B, 2C). The floor cooling means (2A, 2B, 2C) are configured to function as a source for the heat pump unit (107). Using the invention, an optimum, high-performance installation as regards environment, energy saving, animal production and animal well-being is obtained.

## Description

The present invention relates to a stable for keeping cattle, in particular for keeping dairy cattle, wherein the stable comprises a stable area with a stable floor and wherein the stable area is divided into at least a bedding part, a feed alley and a manure collecting part.

The present invention further relates to a stable energy system for such a stable.

The stables referred to above are generally known. The known stables leave room for improvement as regards animal well-being, ammonia emission and durability.

Accordingly it is an object of the present invention to provide an improved stable, in particular as regards animal well-being, ammonia emission and/or durability, wherein in particular the stable is profitable.

This object is achieved with a stable of the kind described in the introduction, which is characterised in that the stable comprises floor cooling means for cooling at least a part of the stable floor of the stable. The use of floor cooling makes it possible to reduce the temperature of the bedding part, thereby inhibiting any bacterial growth at the udders and thus enhancing the animals' well-being. Floor cooling furthermore makes it possible to reduce the temperature of the feed alley, thereby preventing overheating of the feed. This makes it possible to place more feed in the feed alley, so that the frequency with which feed must be deposited in the feed alley can be reduced. Floor cooling furthermore makes it possible to reduce the temperature of the manure collecting part, thereby reducing the emission of ammonia. Floor cooling thus contributes toward enhancing the animals' well-being, reducing the emission of ammonia and furthermore improving the profitability, so that the object of the present invention is achieved.

Further advantages and advantageous embodiments of the invention will be explained hereinafter.

In one embodiment, the floor cooling means are configured to cool at least a part of the stable floor that is associated with the bedding part. The cows' well-being is enhanced, because the cows' excess heat is dissipated. As a result, milk production will increase. The lower temperatures at the udders inhibit bacterial growth at the udders. The cows' well-being is enhanced, and the milk production has been found to increase. The floor cooling means may in particular be configured to reduce the ambient temperature to about 5 °C, as it has been found that the milk production is maximal at this ambient temperature. Sensor means in the form of temperature sensors, for example, as well as control means may be provided for achieving this.

In one embodiment, the floor cooling means are configured to cool at least a part of the stable floor that is associated with the feed alley. Cooling the floor of the feed alley achieves that the feed is cooled. Feed overheating is thus prevented, making it possible to deposit feed less frequently and that in larger quantities. In addition, the feed will stay tastier, so that the cow will consume more feed, which in turn leads to a higher milk production.

In one embodiment, the floor cooling means are configured to cool at least a part of the stable floor that is associated with the manure collecting part. Cooling the manure collecting part inhibits bacterial growth in the manure, thereby opposing the formation of ammonia. In addition to that, floor cooling prevents evaporation of (harmful) gases, among which ammonia, from the manure.

In a special embodiment, the floor cooling means are configured to cool the bedding part, the feed alley as well as the manure collecting part. In this way the three above-described advantages can be achieved in one stable using one technical feature, viz the floor cooling means.

In one embodiment, the stable comprises a manure storage unit, which is provided remote from the manure collecting part; as well as manure scraper means for transporting manure from the manure collecting part to the manure storage unit. It is noted in that regard that liquid manure rates are preferably not used in the stable according to the present invention, but rather flat manure floors which are cleaned regularly, for example several times a day, using manure scrapers. Because manure pits are no longer needed, a significant saving as regards building costs is realised. In addition to that, the use of flat manure floors makes it possible to cool the manure in a simple manner for the purpose of reducing the emission of ammonia.

In an efficient, durable embodiment, the floor cooling means comprise at least one plate-shaped lamella, wherein the plate-shaped lamella comprises a number of side-by-side, parallel flow channels, which open into a fluid inlet chamber with first ends and into a fluid outlet chamber with second ends.

According to one aspect, there is provided a stable energy system comprising a stable according to the present invention as well as a heat pump unit that is connected to the floor cooling means, wherein the floor cooling means are configured to function as a source for the heat pump unit.

In one embodiment, the stable energy system also comprises a heat/cold storage unit which can be connected to the heat pump unit.

The stable energy system may further comprise a manure fermentation unit that is connected to the heat pump. The manure that is produced in a stable can be fermented by means of said unit. By fermenting manure, biogas is formed, which can be used for producing energy, for example, for the farm itself or for third parties. The wet end product (the digestate) that remains after fermentation can further be used as fertiliser.

Especially advantageous in a stable energy system comprising a manure fermentation unit, wherein the stable is provided with floor cooling means, is the fact that the heat that is released via the floors can be utilised for achieving a higher efficiency of the manure fermentation unit. To produce biogas, the manure in the fermentation unit needs to be heated. By utilising residual heat in combination with heat pumps, this can be done in an advantageous manner. In addition to that, also residual heat that is released during other operational processes, such as refrigerating the milk stock, can be utilised. It is furthermore very advantageous if the floor cooling means are configured to cool the manure collecting part, because the nitrogen will remain in the manure as a result of said cooling, so that the efficiency of the manure fermentation unit will increase. Because of this, a stable energy system comprising a manure fermentation unit and floor cooling means is very advantageous.

In one embodiment, the stable energy system further comprises a solar panel that is connected to the heat pump unit. The solar panel may be a thermal collector and/or a PVT panel.

Further advantageous embodiments of the present invention will become apparent upon perusal of the appended figures and the description thereof hereinafter. In the figures:
Figure 1 is a sectional side view of an embodiment of a stable according to the present invention;
Figure 2 is a sectional detail view of a bedding part, a manure collecting part and a feed alley in a stable according to the present invention;
Figure 3 is a larger-scale view showing a detail of figure 2;
Figure 4 is a schematic sectional view of an embodiment of the floor cooling means;
Figure 5 is a schematic top view of an embodiment of the floor cooling means;
Figure 6 is a schematic sectional view of an end of a lamella of the floor cooling means;
Figure 7 is a schematic view of an embodiment of a stable energy system according to the present invention.

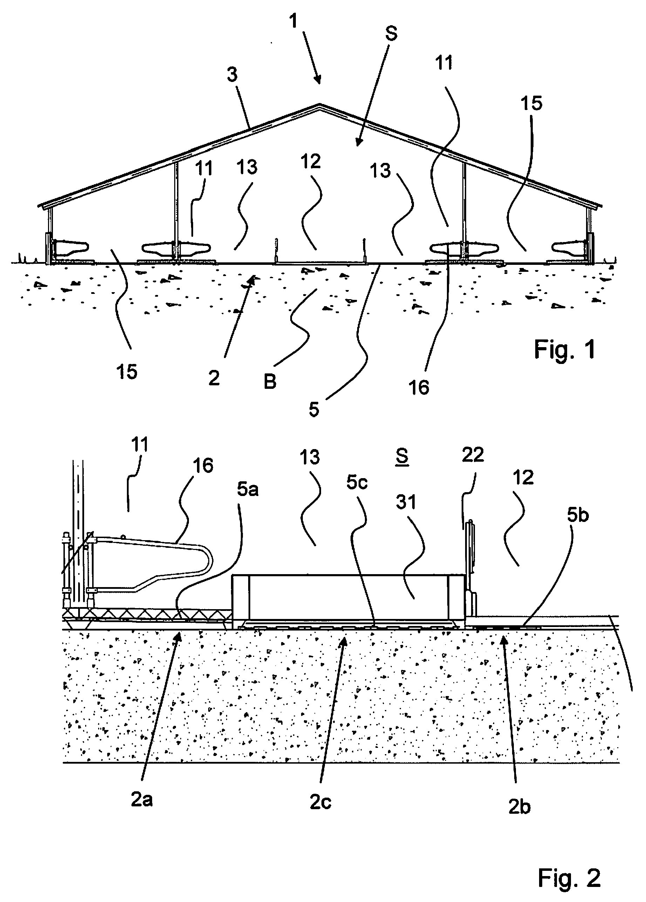

Figure 1 shows a sectional view of a stable 1 according to the present invention. The stable 1 is arranged for keeping cattle therein, in particular dairy cattle. The stable 1 comprises a stable area S with the stable floor 1 that is accessible to the dairy cattle. The term "accessible stable floor" as used in the present application is understood to mean that the stable floor is accessible to the dairy cattle at least temporarily and/or at least partially and/or during certain periods. In the embodiment shown here, the stable area S is divided into at least a bedding part 11, a feed alley 12 provided spaced from the bedding part 11 as well as a manure collecting part 13 that is provided between the feed alley 12 and the bedding part 11. In the embodiment shown here, the feed alley 12 is provided centrally in the stable area S and extends in a longitudinal direction (perpendicular to the plane of the drawing) of the stable 1. Provided on either side of the feed alley 12 are a manure collecting part 13 and a bedding part 11. Seen in the longitudinal direction, the manure collecting part 13 and the bedding part 11 may be subdivided into compartments, for example by using the railings 16 shown here, which are known to the skilled person. At the outer edges of the stable, additional manure collecting parts and bedding part are further provided, generally indicated at 15 here.

As shown, the stable 1 is in its entirety placed on a (flat) ground surface B. In comparison with the stables known from the prior art, manure pits need not be provided - in this embodiment - so that the stable 1 according to the present invention can be built at lower cost. Although the invention can also be used with stables provided with manure pits, the invention is especially advantageous if (flat) manure floors are used, as will become apparent hereinafter.

According to the present invention, the stable 1 comprises floor cooling means for cooling at least part of the stable floor 2 of the stable 1. The use of floor cooling means 2 makes it possible to reduce the temperature of the bedding part 11, thereby enabling the dairy cattle to dissipate heat and thus enhancing the animals' well-being; in the feed alley temperature can be reduced, thereby preventing feed from overheating; and in the manure collecting part the temperature can be reduced, thereby decreasing the emission of ammonia. The floor cooling means 2 according to the present invention contribute toward enhancing the animals' well-being, decreasing the emission of ammonia and improving the profitability.

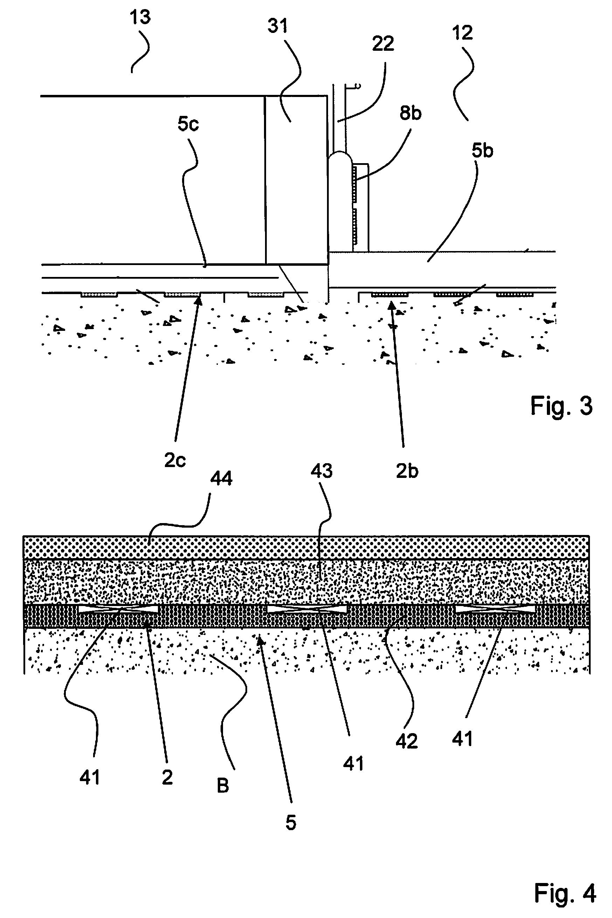

Figure 2 is a larger-scale detail view of the stable 1 of figure 1. The figure shows a part of the stable 1 with the bedding part 11, the manure collecting part 13 and the feed alley 12. The manure floor 2c of the manure collecting part 13 is configured as a (flat) manure floor 2c and is positioned a little lower than the floor 5a of the bedding part 11. The floor 5a of the bedding part 11 may slope down somewhat in the direction of the manure floor 5c, so that manure will move toward the manure collecting part 13 under the influence of the force of gravity. Referring now to figure 3, there is shown that the floor 5b of the feed alley 12 is positioned a little higher than the manure floor 5c. The feed alley 12 is separated from the manure collecting part 13 by a partition 22, which is configured so that the bottom 5b of the feed alley 12 can be reached by a dairy cow's head, so that the dairy cattle can consume the feed placed therein. The figure further shows that a wall cooling means 8b is provided in the partition means 22, which wall cooling means is additionally active to cool the feed placed in the feed alley 12. Referring again to figure 2, there is shown that the bedding part 11, the manure collecting part 13 and the feed alley 12 are each provided with floor cooling means 2a, 2b, 2c for cooling the respective floor parts 5a, 5b, 5c. Such an embodiment is very advantageous, as will be explained in more detail yet hereinafter.

The stable is further provided with manure scraper means 31. The latter are configured to move the manure collected on the manure floor 5c in a longitudinal direction of the stable 1, for example to a central manure storage unit. At said manure storage unit, the manure can be collected and be stored for further processing and/or use.

An embodiment of the floor cooling means 2 will be discussed in further detail below with reference to figures 4 - 6. It is noted in that connection that the embodiment shown in figures 4 - 6 is very advantageous, but that it is also possible to use other floor cooling systems. The invention is not limited to the type of floor cooling means that is used in the present stable.

Figure 4 shows a cross-sectional view of a floor 5 provided with floor cooling means 2 in the form of a lamellae 41. The floor 5 provided with floor cooling means 2 is placed on a (flat) bottom B. The bottom B may be a foundation layer, for example of rough concrete. In an alternative embodiment, the floor 5 can be built on sand. The floor 5 comprises an insulation layer 42 laid on the bottom B, in which the floor cooling means 2 in the form of lamellae 41 are provided. A floor layer 43 is provided on top of the insulation layer. Provided on the floor layer 43 is a finishing layer. In the illustrated embodiment, the insulation layer 42 has substantially the same thickness as the finishing layer 44, and the floor layer 43 is substantially twice as thick as the insulation layer. In one embodiment, the insulation layer 42 is made of expanded polystyrene. In one embodiment, the floor layer 43 is made of cement or concrete. In one embodiment, the finishing layer 44 is made of bitumen. The use of other materials is conceivable, however.

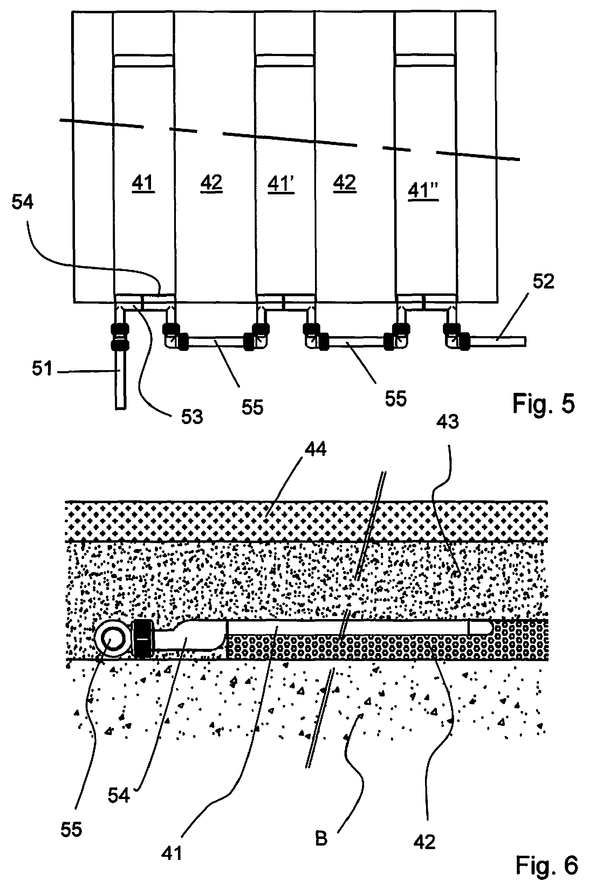

Figures 5 and 6 successively show a top view of the insulation layer 42 with lamellae 41 of the floor cooling means and a lateral section of the floor cooling means 2 in an embodiment thereof. Figure 5 in particular shows that the floor cooling means comprise a number of side-by-side plate-shaped lamellae 41. The plate-shaped lamella 41 comprises a number of side-by-side flow channels extending parallel to each other (not shown), which open into a fluid inlet chamber 53 with first ends thereof and into a fluid outlet chamber 54 with second ends thereof. The floor cooling system comprises a supply line 51 as well as a discharge line 52. Connecting lines 55 are provided, which connect a fluid outlet chamber 54 of a first lamella 41 to a fluid inlet chamber 53 of an adjacent lamella 41'. The configuration of these connecting lines 55 and the fluid inlet chamber 53 and fluid outlet chamber 55 in the composite floor is shown in figure 6. In the illustrated embodiment, the floor cooling means 2 with the insulation layer 42 are embedded in the concrete or cement floor layer 43.

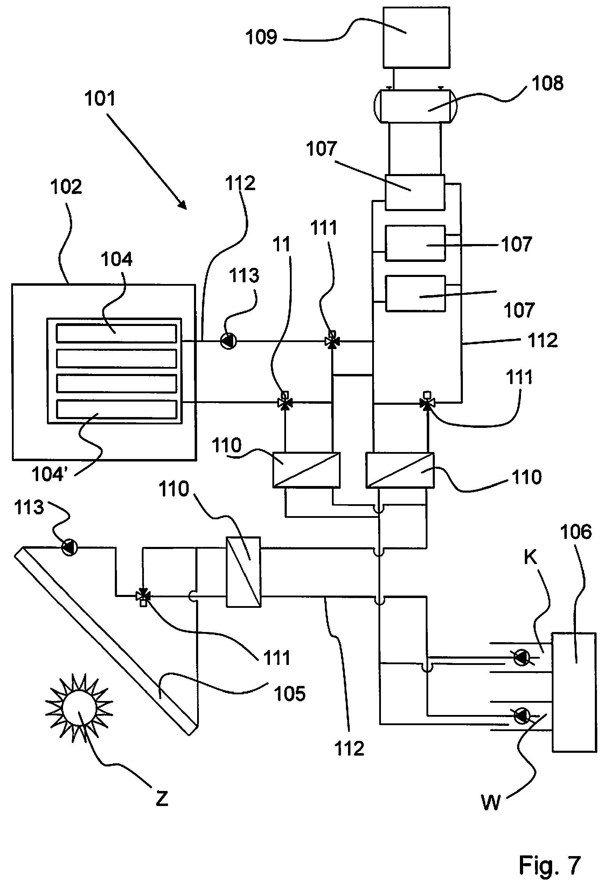

Figure 7, to conclude, shows a schematic view of an embodiment of a stable energy system 101 according to the present invention. The stable energy system 101 comprises a stable 102 with the floor cooling means 104 provided therein. The stable energy system further comprises a multitude of heat pump units 107, which are connected to the floor cooling means 104, in particular by means of conduits 112 (only a limited number of which are provided with reference numerals for the sake of clarity) and by means of one or more pumps 113 and valve means 111, in particular mixing valves 111. The stable energy system is configured to use the heat that is released when the floor is cooled in the heat pump unit 107, so that the floor cooling means are configured to function as a source for the heat pump unit or units 107. The stable energy system also comprises a heat/cold storage unit 106, which is or can be connected to the heat pump unit or units 107. The system 101 is also provided with a solar panel 105, which is connected to the heat pump unit 107 and which is capable of usefully utilising energy from the sun Z in the stable energy system. This application may consist of a solar collector for producing electrical energy, or a PVT panel or a combination thereof for producing electrical as well as thermal energy. In addition to that, the thermal part can function in regenerating the heat/cold storage unit. Various parts of the system 101 may be (indirectly) interconnected by means of heat exchangers 110.

In the illustrated embodiment, the heat pump unit 107 has a capacity of 85 kW, for example. The heat pump units 107 are configured to maintain a storage vessel 108 at a temperature of about 50°C. The system further comprises a manure fermentation unit 109 that is connected to the heat pump unit 107. In the illustrated embodiment, the heat pump unit is connected to the manure fermentation unit 109 via the storage vessel 108. The manure are collected by means of the manure scrapers can be fermented in the manure fermentation unit 109.

With the stable 1 and the stable energy system 101 according to the present invention, heat and cold from various energy flows is exchanged in a durable and efficient manner. In this way the emission of ammonia, among other things, is reduced, the animals' well-being is enhanced and manure is heated in an energy-efficient manner for use in a biogas installation. The connection between the various parts of the stable 1 and the stable energy system 101, and the advantages thereof, will become apparent from the description below.

By simply cooling the (top layer of the) manure, bacterial growth is inhibited. This prevents the formation of ammonia. In addition to that, the formation of other gases, methane, among other gases, is inhibited as well. By using flat (manure) floors and scrapers, the manure can be regularly removed several times a day. By installing the lamellae under these floors, cooling can take place with cold water so as to prevent the formation of ammonia. The cold that is required for this is supplied by the heat pump unit 107 or the heat/cold storage unit.

The heat pumps 107 are installed for the purpose of heating the manure in the storage vessel 108 to a temperature of 50 degrees Celsius. This is necessary in order to obtain a good biogas extraction from the manure. The manure floors 5c function as sources for the heat pumps. They supply the energy to heat pumps 107, which subsequently upgrade it again to the desired temperature. The heating of the manure is a continuous process and this means that there must be a continuous supply of heat for the heat pumps 107. The manure floor 5c can be used for this during a large part of the year, but during the winter period it is not possible nor even desirable to remove the heat from the manure floors 5c. To bridge the winter period, a heat/cold storage unit 106 is provided as well.

The heat/cold storage system is used for supplying additional heat W or cold K, as desired, to the system, see figure 7. If the extraction of heat from the manure floors 5c is not possible or desirable, it will be drawn from the heat source 106. The capacity of the heat source is such that the entire required power for the heat pumps 107 can be obtained therefrom. In this way an installation is obtained which is capable of supplying the required heat (energy) at all times, irrespective of the weather conditions. The heat source 106 is also used for keeping the manure floors 5c frost-free during the cold winter period, so that manure is prevented from freezing to the floor and the manure scrapers can do their work properly. The cold source 106 is used for additional cooling of the floors 1 during the summer. When the demand for heat from the heat pumps 107 for heating the manure is less, the cold source 106 is used for additional cooling. In this way it is ensured that the floors 5 will be cooled at all times when this is necessary for reducing the formation of ammonia.

The bedding places 11 of the cows are also provided with lamellae 41. Said lamellae are used for cooling as desired. Tests have shown that it is desirable to cool the floors 5a during a large part of the year in order to enhance the cows' well-being and to obtain a better milk production. An optimum milk production is achieved at a temperature of about 5°C. Cooling is also advantageous with a view to inhibiting bacterial growth at the udder. Cold is in the first place supplied by the heat pumps 107, and possibly by the cold source 106. The bedding places are temperature-controlled.

It is further generally known that the feed that is deposited for the cows gets heated after a short period of time. To prevent said heating of the feed, floor cooling 5b is to be used here as well. It will inhibit heating of the feed, which is advantageous. It makes it possible to deposit feed less frequently but in larger quantities, because rapid overheating is prevented by the aforesaid cooling. This results in a saving in labour, among other things. Furthermore, the feed will remain more tasty, so that the cow will ingest more feed, which will benefit the milk production. Cold is in the first place supplied by the heat pumps 107 and possibly by the cold source 106. The feed alleys 12 are temperature-controlled.

The solar panels 105 are preferably PVT panels in combination with a thermal collector (PVT). The own generation of electricity is used to supply the stable 1 with current. Eventually, the stable may thus be fully self-supporting in electricity. The frames on which the panels are supported may be made of a watertight construction, by which at the same time a roof is realised. This obviates the need for other roof solutions, such as corrugated sheets or sheet piling, so that the system is relatively inexpensive. The thermal collectors 105 provide an additional supply of heat for the heat pumps 107 and the heat/cold storage unit 106. As a result of the higher supply temperatures, the heat pumps 107 will perform with improved efficiency (higher COP, or in other words, a greater thermal energy output per kWh of electrical energy to the heat pumps).

In order to ensure a good temperature balance in the heat/cold storage unit 106, the thermal collectors 106 have an additional function. It is possible to load heat as well as cold. It is also possible to use the heat or cold from the panels directly for the aforesaid applications. Because the panels are cooled using this thermal solution, the electricity output is higher and the life is extended.

Using the stable 1 and the stable energy system according to the present invention, an optimum, high-performance installation as regards the environment, energy saving, animal production and animal well-being is obtained.

In the foregoing the invention has been explained with reference to a preferred embodiment. Equivalent embodiments are conceivable within the scope of the invention. The protection sought is determined by the appended claims.

## Claims

1. A stable for keeping cattle, in particular for keeping dairy cattle, wherein the stable comprises a stable area with a stable floor that is accessible to the dairy cattle and wherein the stable area is divided into at least:
- a bedding part;
- a feed alley provided spaced from the bedding part; and
- a manure collecting part provided between the feed alley and the bedding part;
**characterised in that** the stable comprises floor cooling means for cooling at least a part of the stable floor of the stable.

2. A stable according to claim 1, wherein the floor cooling means are configured to cool at least a part of the stable floor that is associated with the bedding part.

3. A stable according to claim 2 or 3, wherein the floor cooling means are configured to cool at least a part of the stable floor that is associated with the feed alley.

4. A stable according to claim 1, 2 or 3, wherein the floor cooling means are configured to cool at least a part of the stable floor that is associated with the manure collecting part.

5. A stable according to claim 4, comprising:
- a manure storage unit, which is provided remote from the manure collecting part; as well as
- manure scraper means for transporting manure from the manure collecting part to the manure storage unit.

6. A stable according to any one of the preceding claims, wherein the floor cooling means comprise at least one plate-shaped lamella, wherein the plate-shaped lamella comprises a number of side-by-side, parallel flow channels, which open into a fluid inlet chamber with first ends and into a fluid outlet chamber with second ends.

7. A stable energy system comprising a stable according to any one of the preceding claims as well as a heat pump unit that is connected to the floor cooling means, wherein the floor cooling means are configured to function as a source for the heat pump unit.

8. A stable energy system according to claim 7, wherein the stable energy system also comprises a heat/cold storage unit which can be connected to the heat pump unit.

9. A stable energy system according to claim 7 or 8, further comprising a manure fermentation unit that is connected to the heat pump.

10. A stable energy system according to any one of claims 7 - 9, further comprising a solar panel that is connected to the heat pump unit.
